(19)

**Europäisches Patentamt**
**European Patent Office**
**Office européen des brevets**

(11) **EP 2 500 148 B1**

(12) **EUROPÄISCHE PATENTSCHRIFT**

(45) Veröffentlichungstag und Bekanntmachung des Hinweises auf die Patenterteilung:
**24.06.2015 Patentblatt 2015/26**

(51) Int Cl.:
***B25J 9/16*** *(2006.01)*

(21) Anmeldenummer: **12001245.5**

(22) Anmeldetag: **24.02.2012**

(54) **Verfahren und Vorrichtung zum Steuern eines Roboters mit Hilfe eines virtuellen Modells des Roboters**

Method and apparatus for controlling a robot using a virtual model of the robot

Procédé et dispositif de commande d'un robot avec un modèle virtuel du robot

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2011 DE 102011014299**

(43) Veröffentlichungstag der Anmeldung:
**19.09.2012 Patentblatt 2012/38**

(73) Patentinhaber: **KUKA Roboter GmbH**
**86165 Augsburg (DE)**

(72) Erfinder: **Keibel, Andreas, Dr.**
**86161 Augsburg (DE)**

(74) Vertreter: **Schlotter, Alexander Carolus Paul**
**Wallinger Ricker Schlotter Tostmann**
**Patent- und Rechtsanwälte**
**Zweibrückenstrasse 5-7**
**80331 München (DE)**

(56) Entgegenhaltungen:
**EP-A1- 2 281 666      DE-A1- 10 248 991**
**DE-A1- 10 351 669      DE-A1-102009 029 061**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und ein Mittel zum Steuern eines Roboters.

Industrieroboter arbeiten herkömmlicherweise fest vorgegebene Sollbahnen ab. Um jedoch auch größere Bauteilgeometrie- und Positionierungstoleranzen handhaben zu können, ist es, beispielsweise aus der DE 199 10 699 A1, bekannt, mittels Sensoren Parameter eines Arbeitsraumes, etwa die tatsächliche Position eines zu greifenden oder die Kante eines zu schweißenden Bauteils, zu erfassen und den Roboter während des Arbeitsprozesses entsprechend nachzuregeln.

Bisher werden hierzu vorab Sensoren installiert und kalibriert sowie eine entsprechende Regelung entworfen und implementiert, die auf Basis des Sensorausgangs den Arbeitsprozess regelt. Dies ist aufwendig, unflexibel und erfordert große Expertise in der Auswahl und Konfiguration geeigneter Sensoren sowie der Implementierung der jeweils spezifischen Regelung.

DE 103 51 669 A1 betrifft ein Verfahren und eine Vorrichtung zum Steuern eines Handhabungsgerätes relativ zu einem Objekt. Ziel ist es, eine Roboterprogrammierung zu beschleunigen und dabei insbesondere Zeiten zwischen Programmierung und Ausführung eines Programms zu verkürzen, indem eine Möglichkeit zur automatischen Positionsanpassung geschaffen wird..

Die EP 2 281 666 A1 betrifft ein Verfahren und eine Vorrichtung zur Vermessung eines Bauteils. Ziel ist es, eine rasche, kostengünstigere Prüfung, Absicherung oder Optimierung eines Prozesses zu ermöglichen. Dazu wird vorgeschlagen, ein virtuelles Modell eines zu vermessenden Merkmals mittels eines virtuellen Modells einer Erfassungseinrichtung testweise virtuell zu vermessen.

Die DE 102 48 991 A1 betrifft eine Vorrichtung zur Simulation eines Steuerungs- und Maschinenverhaltens von Werkzeug- oder Produktionsmaschinen. Ziel ist es, einen möglichst echtzeitfähigen Simulator zu schaffen, der Massen- und Geometriezustände von mechanischen Elementen der Maschine und der jeweiligen Antriebssysteme für beliebige, geregelte und ungeregelte, Achsen simuliert, wobei die Steuerung im Simulator dupliziert ist.

DE 10 2009 029 061 A1 betrifft ein Verfahren und eine Vorrichtung zur Überprüfung eines Bearbeitungszustands. Ziel ist es, Probleme bei der Bearbeitung von Werkstücken zu verhindern, ohne dass der Bediener sich dessen bewusst ist, indem geprüft wird, ob ein Werkstück oder eine Werkstückhalterung, die an einer Werkzeugmaschine befestigt sind, verrutscht sind. Dazu wird vorgeschlagen, über eine CCD-Kamera zweidimensionale Bilddaten bezüglich des Werkstücks und der Werkstückhalterung zu erfassen.

Aufgabe der vorliegenden Erfindung ist es, einen Roboter zu verbessern.

Diese Aufgabe wird durch ein Verfahren mit den Merkmalen des Anspruchs 1 gelöst. Anspruch 9 stellt ein Mittel zur Durchführung eines erfindungsgemäßen Verfahrens unter Schutz, die Unteransprüche betreffen vorteilhafte Weiterbildungen. Dabei kann ein Mittel im Sinne der vorliegenden Erfindung hard- und/oder softwaretechnisch ausgebildet sein, insbesondere als Recheneinrichtung, die zur Durchführung eines erfindungsgemäßen Verfahrens eingerichtet ist, als Programm, vorzugsweise Programmmodul, welches ein erfindungsgemäßes Verfahren durchführt, wenn es in einer Recheneinrichtung ausgeführt wird, und/oder als Speichermedium, insbesondere Datenträger, mit einem solchen Programm(modul). Erfindungsgemäß wird ein virtuelles Modell des zu steuernden realen Roboters eingerichtet. Unter einem Einrichten wird vorliegend insbesondere ein Erstellen eines neuen wie auch ein Auswählen, Konfigurieren, Parametrieren oder sonstiges Verändern eines vorhandenen Modells verstanden. Ein Modell bildet in einer bevorzugten Ausführung mechanische, insbesondere kinematische und/oder dynamische, energetische, thermische, optische und/oder akustische Eigenschaften des realen Roboters, vorzugsweise vereinfacht, insbesondere mathematisch in Form von (Un)Gleichungen, Relationen, Tabellen oder dergleichen ab. Rein exemplarisch bildet die Gleichung

$$r = \begin{bmatrix} x \\ z \end{bmatrix} = l \cdot \begin{bmatrix} \cos(q) \\ \sin(q) \end{bmatrix} \qquad (1)$$

einen einachsigen Roboterarm der Länge l kinematisch ab, indem sie die Position seines TCPs in Abhängigkeit von seinem Gelenkwinkel q beschreibt, während die Gleichung

$$m \cdot l^2 \frac{d^2 q}{dt^2} = \tau \qquad (2)$$

mit der Masse m den Roboterarm dynamisch abbildet, indem sie den Drehimpuls in Abhängigkeit von seinem Antriebsmoment $\tau$ beschreibt, also jeweils ein Modell des Roboters darstellt.

Das Modell weist ein virtuelles Erfassungsmittel auf. Dabei kann das virtuelle Erfassungsmittel insbesondere einen oder mehrere, vorzugsweise optische, mechanische, thermische, akustische oder andere, Sensoren beschreiben, insbesondere deren Ausgang in Abhängigkeit von einer Erfassung und gegebenenfalls Verarbeitung, etwa Filterung, Klassifizierung, Transformation oder dergleichen, des jeweiligen Sensors. So kann das virtuelle Erfassungsmittel beispielsweise einen binären Wert eines Anwesenheitssensors, etwa eines Gewichtsoder Lichtschrankensensors, einen eindimensionalen Wert eines Abstandssensors, etwa eines Lasersensors, einen zwei- oder dreidimensionalen Wert eines Lagesensors, beispielsweise einer Anordnung von einer oder mehrerer Kameras und einer nachgeschalteten Bildauswertung oder einem oder mehreren Laserscannern, und dergleichen beschreiben. Zur kompakteren Darstellung werden auch mehrere Sensoren, unter denen vorliegend insbesondere Mittel zum Erfassen einer ein- oder mehrdimensionalen physikalischen Größe wie insbesondere eines Abstandes, einer Lage und/oder Orientierung, und/oder eines Bildes, verstanden werden, als (ein) Erfassungsmittel, von diesen erfasste Werte zusammenfassend als (ein) ein-, zwei-, drei- oder mehrdimensionaler Eingang und von diesen ausgegebene Werte, insbesondere Messwerte, die in einer bevorzugten Weiterbildung bearbeitet, beispielsweise skaliert, gefiltert oder auf andere Weise modifiziert wurden, entsprechend als (ein) ein-, zwei-, drei- oder mehrdimensionaler Ausgang bezeichnet. Rein exemplarisch beschreibt die Gleichung

$$a = \sqrt{x^2 + z^2} \quad (3)$$

den Ausgang a eines Abstandssensors bei Erfassung eines Objektes in der relativen Position (x, z) zum Sensor, d.h. bildet ein virtuelles Modell des Abstandssensors.

Ein Arbeitsprozess des Roboters wird virtuell simuliert. Unter einem Arbeitsprozess wird insbesondere eine, gegebenenfalls in Abschnitte, einzelne Punkte oder dergleichen unterteilte, Bahn eines Roboters, gegebenenfalls einschließlich entsprechender Zustände eines robotergeführten Werkzeugs, verstanden. Es kann sich insbesondere um einen Bearbeitungsprozess, etwa eine Schweiß-, Zerspanoder Lackierbahn, oder um einen Transferprozess, etwa den Transport einer Palette, handeln. Eine virtuelle Simulation kann insbesondere eine Zeitintegration von kinematischen oder Bewegungsgleichungen umfassen.

Beispielsweise können aus Gl. (1) eine Folge von Gelenkwinkel q(t) ermittelt werden, um den TCP auf einer vorgegebenen Bahn r(s) zu führen, und aus Gl. (2) die hierzu notwendigen Antriebsmomente τ(s(t)). Dabei wird auch der aus dem Arbeitsprozess resultierende virtuelle Ausgang des virtuellen Erfassungsmittels ermittelt. Beispielsweise kann aus den Gl. (1) und (3) der Abstand ermittelt werden, den ein im TCP positionierter Abstandssensor während des Abfahrens der Bahn ausgibt.

Einem Aspekt der Erfindung liegt nun folgende Idee zugrunde: wird im virtuellen Modell ein Soll-Szenario, insbesondere ohne Abweichungen von Soll-Geometrien, -Positionen und dergleichen, simuliert, so erfasst das virtuelle Erfassungsmittel dabei ideale, d.h. Soll-Werte. Wird der reale Roboter nun so gesteuert, dass der von dem realen Erfassungsmittel erfasste Ausgang - im Rahmen einer Regeltoleranz - dem Ausgang des virtuellen Erfassungsmittels beim simulierten Arbeitsprozess entspricht, so entspricht, von Modellungenauigkeiten abgesehen, auch der reale Arbeitsprozess dem simulierten, gewünschten Arbeitsprozess. Bildet etwa eine virtuelle Kamera das Bild eines vom Roboter zu greifenden Werkstücks in der Soll-Position ab, und wird ein Roboter so gesteuert, dass das Bild einer realen, robotergeführten Kamera mit dem virtuellen Bild übereinstimmt, wird der Roboter in die relativ zum realen Werkstück korrekte Soll-Pose gesteuert, in der er es greifen kann.

Somit kann auf sehr einfache, intuitive und flexible Weise eine für das Erfassungsmittel und den Arbeitsprozess geeignete Regelung vorgegeben werden. Zur kompakteren Darstellung wird vorliegend auch eine Regelung, d.h. die Vorgabe von Steuergrößen, etwa für Aktoren oder eine Pose eines Roboters, auf Basis einer Differenz zwischen Ist- und Soll-Werten, als Steuerung bzw. Steuern bezeichnet.

Allgemein wird erfindungsgemäß somit eine Steuergröße des realen Roboters auf Basis des virtuellen Ausgangs vorgegeben. Eine Steuergröße kann entsprechend wiederum ein- oder mehrdimensional sein und insbesondere eine kontinuierliche oder diskrete Folge ein- oder mehrdimensionaler Werte aufweisen. Beispielsweise kann eine Steuergröße Soll-Änderungen der Gelenkkoordinaten eines Roboters aufweisen, die so vorgegeben werden, dass ein Ausgang des realen Erfassungsmittels zum virtuellen Ausgang konvergiert.

In einer bevorzugten Ausführung wird der virtuelle Ausgang während der Ausführung des Arbeitsprozesses durch den reale Roboter simuliert. Dies kann vorteilhaft ein umfangreiches Abspeichern vorab simulierter Ausgänge sowie eine Inter- bzw. Extrapolation zwischen diskret abgespeicherten Ausgängen vermeiden. Einem Aspekt der Erfindung liegt allgemein die Idee zugrunde, dass die Information, die das virtuelle Modell enthält, auch während der Ausführung des realen Arbeitsprozesses zur Verfügung steht. Zusätzlich oder alternativ kann eine Simulation des virtuellen Modells und insbesondere des virtuellen Ausgangs, während der reale Roboter den Arbeitsprozess ausführt, eine Anpassung und damit Verbesserung des virtuellen Modells während der Ausführung des realen Arbeitsprozesses ermöglichen, etwa, indem Parameter wie zum Beispiel einer robotergeführten Nutzlast während des Prozesses online ermittelt und in das virtuelle Modell eingepflegt werden.

Gleichermaßen ist es möglich, den virtuellen Ausgang vor der Ausführung des Arbeitsprozesses durch den realen Roboter zu simulieren, abzuspeichern und während des realen Arbeitsprozesses abzurufen, wobei gegebenenfalls zwischen gespeicherten Ausgängen interpoliert wird, um einen virtuellen Ausgang für einen nicht abgespeicherten Arbeitsprozesszustand zu ermitteln. Dies kann vorteilhaft mit weniger Rechenleistung als eine online-Simulation des virtuellen Modells geschehen.

In einer bevorzugten Ausführung wird der virtuelle Arbeitsprozess und/oder Ausgang mit dem realen Arbeitsprozess synchronisiert. Dies kann insbesondere durch eine synchrone Online-Simulation während des realen Arbeitsprozesses, aber auch durch eine Skalierung abgespeicherter, vorab ermittelter virtueller Ausgänge auf den realen Arbeitsprozess erfolgen. Hierzu kann in einer bevorzugten Weiterbildung der Arbeitsprozess zeitlich, geometrisch oder ereignisbasiert gegliedert und die sich ergebenen Abschnitte des realen Arbeitsprozesses und des virtuellen Arbeitsprozesses bzw. des dabei ermittelten virtuellen Ausgangs, einander zugeordnet werden. Beispielsweise können für einen über der Zeit simulierten virtuellen Arbeitsprozess für diskrete Zeitpunkte die virtuellen Ausgänge ermittelt, gespeichert und bei Erreichen des entsprechenden Zeitpunktes im realen Arbeitsprozess verwendet werden, gegebenenfalls unter der vorerwähnten Interpolation für nicht gespeicherte Zeitpunkte. Eine geometrische Gliederung kann beispielsweise eine Roboterbahn in äquidistante oder durch Stützstellen vorgegebene Abschnitte unterteilen, wobei beim Abfahren der realen Abschnitte die hierfür virtuell simulierten Ausgänge zugrundegelegt werden. Ein Arbeitsprozess kann zusätzlich oder alternativ ereignisbasiert gegliedert werden, indem zum Beispiel virtuelle Ausgänge für durch Ereignisse, etwa das Ansprechen eines Sensors, oder Programmanweisungen, zum Beispiel das Abarbeiten eines Programmabschnittes, getriggerte Zustände gespeichert werden. Insbesondere können durch eine synchronisierte virtuelle Simulation online während des realen Arbeitsprozesses Sollgrößen für die Regelung des realen Arbeitsprozesses zur Verfügung gestellt werden. Die Synchronisierung kann insbesondere zeitlich, geometrisch oder von Wegpunkt zu Wegpunkt erfolgen.

In einer bevorzugten Ausführung übertragen realer Roboter und das virtuelle Modell gegenseitig Daten. Dies kann einerseits der Synchronisierung von virtuellem Modell und realem Roboter dienen. Zusätzlich oder alternativ kann so das virtuelle Modell an den realen, gegebenenfalls sich ändernden, Roboter angepasst werden. Neben der Übertragung von Daten, insbesondere virtuellen Ausgängen, vom virtuellen Modell an den realen Roboter, insbesondere einem Steuermittel wie etwa einer Robotersteuerung, erfolgt hierzu auch eine Übertragung von Daten von dem realen Roboter an das virtuelle Modell.

Erfindungsgemäß wird ein Erfassungsmittel aus einer Mehrzahl von Erfassungsmitteln ausgewählt. Die virtuelle Simulation erlaubt vorteilhaft das Durchspielen des Arbeitsprozesses mit unterschiedlichen Erfassungsmitteln. So kann insbesondere ermittelt werden, ob ein Erfassungsmittel einen für die Steuerung geeigneten Ausgang aufweist, etwa eine Kamera oder ein Laserscanner einen geeigneten Erfassungsbereich abdecken. Erfindungsgemäß wird ein virtuelles Erfassungsmittel aus einer Bibliothek ausgewählt. Zusätzlich wird ein reales Erfassungsmittel aus einer Mehrzahl von Erfassungsmitteln ausgewählt, welches durch ein geeignetes, in der Simulation verwendetes virtuelles Modell beschrieben wird. Ergibt beispielsweise die Simulation, dass das Erfassungsmittel einen Ausgang zur Verfügung stellen muss, der einen Abstand im Bereich zwischen 10 und 100 cm wiedergibt, kann bei der Konfiguration des realen Roboters ein entsprechender realer Sensor ausgewählt werden.

Erfindungsgemäß wird ein reales Erfassungsmittel allgemein auf Basis des virtuellen Erfassungsmittels eingerichtet, insbesondere ausgewählt, positioniert, parametrisiert, gesteuert und/oder ausgewertet. Beispielsweise kann sich aus der virtuellen Simulation eine geeignete Position oder Kalibrierung ergeben. Es ist auch möglich, während der Ausführung des realen Arbeitsprozesses das reale Erfassungsmittel auf Basis des virtuellen Erfassungsmittels zu steuern. So kann beispielsweise eine reale Kamera- oder Laserscannerstellung einem simulierten Werkstückpositionsverlauf nachgeführt werden. Auch eine Auswertung des realen Erfassungsmittels auf Basis des virtuellen Erfassungsmittels kann vorteilhaft sein, etwa eine Eliminierung von systematischen Messfehlern auf Basis eines diese abbildenden virtuellen Modells des Erfassungsmittels. Wird zum Beispiel eine Trägheit eines Sensors mitmodelliert, kann der reale Ausgang dieses Sensors auf Basis der Simulation, insbesondere online während der Ausführung des Arbeitsprozesses, entsprechend korrigiert werden. Bildet etwa das Modell der Gl. (3) einen Versatz $\Delta x$ des Sensors ab, so kann der reale Ausgang a entsprechend korrigiert werden:

$$a = \sqrt{(x + \Delta x)^2 + z^2} \quad (3')$$

Insbesondere, um ein geeignetes Erfassungsmittel auszuwählen, geeignet zu positionieren, und/oder zu kalibrieren, werden in einer bevorzugten Ausführung im virtuellen Modell virtuelle Abweichungen von einem Sollzustand simuliert und der resultierende virtuelle Ausgang des virtuellen Erfassungsmittels bewertet. Soll beispielsweise ein Roboter ein Werkstück greifen, dessen Lage in x-Richtung variieren kann, wird hierzu im virtuellen Modell ein virtuelles Erfassungsmittel zur Erfassung der Lage des Werkstücks in x-Richtung vorgesehen. Indem in der Simulation die Lage variiert, d.h. eine virtuelle Abweichung vom Sollzustand simuliert wird, erhält man in der Simulation einen entsprechenden virtuellen Ausgang. Diesen kann man nun darauf bewerten, ob er eine Ausregelung der Lagetoleranz zulässt. Allgemein kann so die Beobachtbarkeit von Regelgrößen durch das Erfassungsmittel simuliert werden.

In einer bevorzugten Ausführung wird auf Basis des virtuellen Modells, insbesondere des virtuellen Erfassungsmittels und/oder dessen virtuellem Ausgang, automatisch eine Regelung vorgegeben. Wie vorstehend allgemein erläutert, basiert ein Aspekt der vorliegenden Erfindung auf der Idee, den virtuellen Ausgang als bei der realen Roboter zu erreichenden Soll-Zustand vorzugeben. Sind Ist- und Soll-Zustand sowie Stellgrößen grundsätzlich bekannt, existieren eine Reihe von Reglerentwurfs-Verfahren, hierzu automatisch eine, insbesondere stabile, Regelung vorzugeben. Insbesondere hierzu können, wie vorstehend erläutert, im virtuellen Modell virtuelle Abweichungen von einem Sollzustand simuliert und der resultierende virtuelle Ausgang des virtuellen Erfassungsmittels bewertet werden. So können beispielsweise durch eine Simulation verschiedenen Lageabweichungen entsprechende Ausgänge und diesen wiederum entsprechende Stell- bzw. Regeleingriffe zugeordnet werden, was verallgemeinernd ebenfalls als Vorgabe einer Regelung auf Basis des virtuellen Modells bezeichnet wird. Vorteilhaft kann insbesondere die Parametrierung und Konfiguration einer realen Regelung vereinfacht werden.

Wie vorstehend ausgeführt, kann der virtuelle Ausgang, etwa ein Abstand oder ein Bild, direkt oder nach Bearbeitung, etwa Filterung, Skalierung, Kalibrierung oder dergleichen, als Sollgröße vorgegeben werden. Diese Sollgröße kann im realen Arbeitsprozess während des Prozessablaufes verwendet und insbesondere zeitgleich in einem mitlaufenden virtuellen Modell erzeugt oder bereits vor dem realen Ablauf aufgezeichnet werden. Gleichermaßen kann eine Steuergröße auch indirekt auf Basis des virtuellen Ausgangs vorgegeben werden, etwa, indem mehrere Komponenten des Ausgangs zu einem gemeinsamen Gütekriterium zusammengefasst werden. So kann beispielsweise ein dreiachsiger Industrieroboter so gesteuert werden, dass der kartesische Abstand seines TCPs zu einer Soll-Lage und die Winkelabweichungen zu einer Soll-Orientierung im Mittel minimal werden. Hierzu können die von Lage- und Winkelsensoren erfassten Werte, die die Komponenten des Ausgangs des Erfassungsmittels bilden, gewichtet miteinander zu einem Gütekriterium zusammengefasst werden.

In einer bevorzugten Ausführung weist ein erfindungsgemäßes Mittel einen Server auf, mit dem Komponenten des realen Roboters, insbesondere ein Erfassungsmittel und/oder ein Steuermittel, als Klienten kommunizieren. Auf dem Server oder einem mit ihm verbundenen Klienten wird die Simulation ausgeführt. Dies kann in vorteilhafter Weise insbesondere den vorstehend erläuterten Datenaustausch zwischen realer Roboter und virtuellem Modell und/oder deren Synchronisierung verbessern. Insbesondere können reale Komponenten als Klienten das virtuelle Modell, vorzugsweise während der Ausführung des Arbeitsprozesses, aktualisieren bzw. pflegen, so dass diese Daten auch den weiteren Klienten zur Verfügung stehen. Hat beispielsweise eine Lichtschranke eine aktuelle Größe einer Nutzlast ermittelt, kann die Lichtschranke als Klient dieses Datum in das virtuelle Modell einpflegen, so dass es auch anderen Klienten, beispielsweise einem Lagesensor als Kalibrierung, während der Ausführung des Arbeitsprozesses zur Verfügung steht. Eine entsprechend aktualisierte Simulation liefert dann vorteilhafterweise auch einen entsprechend aktualisierten Ausgang.

Weitere Vorteile und Merkmale ergeben sich aus den Unteransprüchen und den Ausführungsbeispielen. Hierzu zeigt, teilweise schematisiert, die einzige:

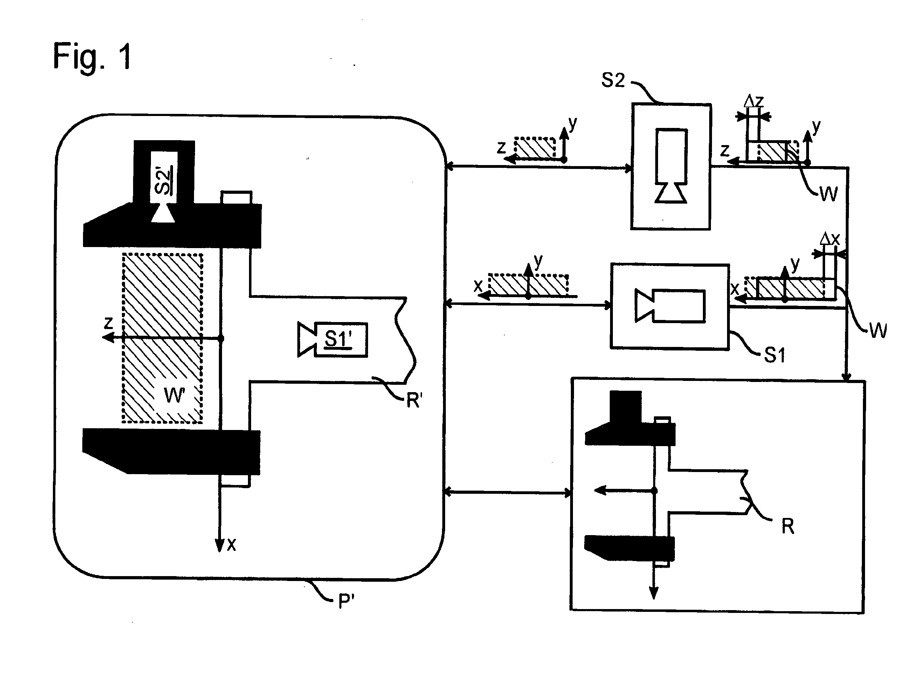

Fig. 1: ein Mittel zum Steuern eines Roboters gemäß einem Verfahren nach einer Ausführung der vorliegenden Erfindung.

Fig. 1 zeigt rechts ausschnittsweise einen realen Roboter R, der einen Greifer mit zwei gegeneinander beweglichen Backen führt. Dieser soll in einem Arbeitsprozess ein Werkstück W greifen, welches mit Toleranzen in x- und z-Richtung zugeführt wird.

Hierzu wird in einem Modell- und Simulationsmittel, das in Fig. 1 links angedeutet ist, ein virtuelles Modell R' des Roboters eingerichtet, beispielsweise aus einer Bibliothek zusammengestellt und/oder parametriert, und der Arbeitsprozess P', in dem das virtuelle Modell W' des Werkstücks toleranzfrei, d.h. in seiner Soll-Lage positioniert ist, virtuell simuliert.

Das Modell enthält auch ein virtuelles Erfassungsmittel S1', S2', welches zwei Kameras abbildet, die einen Arbeitsraum des Roboters in x- bzw. z-Blickrichtung erfassen. Zur Verdeutlichung ist das Modell S1' der ersten Kamera auf der z-Achse am Arm des Roboters, das Modell S2' der zweiten Kamera an einer Backe auf einer Parallelen zur x-Achse des TCP-Systems durch die Soll-Werkstückmitte angeordnet.

Bei der virtuellen Simulation des Arbeitsprozesses P' wird auch der hieraus resultierende virtuelle Ausgang des virtuellen Erfassungsmittels S1', S2', d.h. die von den Kameras aufgenommenen Bilder, simuliert. Diese werden, wie in Fig. 1 über den entsprechenden Kommunikationsdoppelpfeilen angedeutet, an die realen Kameras S1, S2 übertragen.

Die Kameras S1, S2 legen diese simulierten Kamerabilder, die sich bei einem toleranzfrei simulierten Arbeitsprozess ergeben, als Sollgrößen einer Lageregelung zugrunde. Hierzu vergleichen sie sie, wie in Fig. 1 rechts angedeutet, mit Ist-Bildern der tatsächlichen Lage in x- und z-Richtung des realen Werkstücks W bei Anfahren mit dem Greifer, ermitteln eine Lagedifferenz $\Delta x$, $\Delta z$ und geben diese als auszuregelnde Steuergröße an die Robotersteuerung vor. Die Robotersteuerung regelt diese Lagedifferenzen, im einfachsten Fall mit einer Proportionalregelung, die den Greifer proportional zu den Lagedifferenzen $\Delta x$, $\Delta z$ kartesisch versetzt, aus, so dass die realen Kamerabilder der beiden Kameras S1, S2 - im Rahmen der Regeltoleranz - mit den virtuellen Kamerabildern zur Deckung gebracht werden. Die Bildung der Regeldifferenz in den Komponenten S1, S2 ist hier nur exemplarisch zur Verdeutlichung, in einer anderen Implementierung kann diese Funktionaliät beispielsweise auch in der Robotersteuerung implementiert sein.

Die virtuellen Kamerabilder können vorab simuliert, abgespeichert und dann während der Ausführung des realen Arbeitsprozesses abgerufen und mit den realen Kamerabildern verglichen werden. In einer bevorzugten Ausführung läuft die virtuelle Simulation P' synchronisiert mit dem realen Arbeitsprozess ab, wobei die realen Kameras S1, S2 - wie in Fig. 1 durch die Doppelkommunikationspfeile angedeutet auch Daten, etwa eine

Kamerastellung wie beispielsweise einen Winkel einer um die parallel zur y-Achse drehbaren Kamera, in das Modell S1' bzw. S2' einpflegen und dieses so während der Ausführung aktualisieren. Umgekehrt kann auch das Modell entsprechende Steuerbefehle, etwa zur Änderung der Kamerastellung, an die realen Kameras S1, S2 übertragen. Auch die reale Robotersteuerung kann aktuelle Daten, etwa Positionsdaten, des Roboters R an das Modell R' übertragen und so die Simulation aktualisieren. Insbesondere bietet sich so der Vorteil, ständig auf den vollen Informationsgehalt der sich an die Realität anpassenden Simulation zugreifen zu können.

Die o.g. Regelung kann sehr einfach, insbesondere automatisch vorgegeben werden. Insbesondere hierzu können zunächst im virtuellen Modell virtuelle Abweichungen von einem Sollzustand simuliert werden, indem etwa das virtuelle Modell W' des Werkstücks virtuell um $\Delta x$ versetzt positioniert wird. Dann kann der daraus resultierende virtuelle Ausgang des virtuellen Erfassungsmittels bewertet werden. Insbesondere kann festgestellt werden, ob eine solche Lageabweichung durch die Kamera S1 geeignet beobachtet werden kann. Gegebenenfalls kann stattdessen ein anderer Sensor ausgewählt werden. In der Simulation mit einer virtuellen Abweichung kann dann eine (virtuelle) Positionsänderung des Roboters R' ermittelt werden, die die virtuelle Abweichung kompensiert. Somit kann in einfacher Weise einer Abweichung eine Steuergröße zugeordnet und so ein Regler vorgegeben werden.

Im Ausführungsbeispiel läuft die Simulation auf einem Server P', mit dem die Komponenten S1, S2 und R des realen Roboters, wie durch die Doppelkommunikationspfeile angedeutet, als Klienten kommunizieren. So können, wie vorstehend erläutert, insbesondere die Kameras S1, S2 und der Roboter R das Modell S1', S2', R' pflegen, indem etwa aktuelle Kamera- bzw. Roboterstellungen während der Ausführung des realen Arbeitsprozesses zurückgespielt werden.

Bezugszeichenliste

P'        Simulation des Arbeitsprozesses "Greifen eines Werkstücks"/Server, auf dem diese Simulation ausgeführt wird
R         Roboter R' virtuelles Modell des Roboters R
S1, S2    Kamera (reales Erfassungsmittel)
S1', S2'  virtuelles Erfassungsmittel
W         Werkstück
W'        virtuelles Werkstück

**Patentansprüche**

1. Verfahren zum Steuern eines realen Roboters (R), mit den Schritten:

Einrichten eines virtuellen Modells (R') des realen Roboters, wobei das Modell ein virtuelles Erfassungsmittel (S1', S2') aufweist;
virtuelles Simulieren eines Arbeitsprozesses (P') des Roboters und eines aus dem Arbeitsprozess resultierenden virtuellen Ausgangs des virtuellen Erfassungsmittels; und
Vorgeben einer Steuergröße ($\Delta x$, $\Delta z$) des realen Roboters auf Basis des virtuellen Ausgangs, wobei das virtuelle Erfassungsmittel aus einer Bibliothek ausgewählt wird und ein reales Erfassungsmittel auf Basis des virtuellen Erfassungsmittels eingerichtet, insbesondere ausgewählt, positioniert, parametrisiert, gesteuert und/oder ausgewertet wird.

2. Verfahren nach Anspruch 1, **dadurch gekennzeichnet, dass** der virtuelle Ausgang simuliert wird, während oder bevor der Arbeitsprozess durch den realen Roboter ausgeführt wird.

3. Verfahren nach einem der vorhergehenden Ansprüche, **dadurch gekennzeichnet, dass** der virtuelle Arbeitsprozess und/oder Ausgang mit dem realen Arbeitsprozess synchronisiert wird.

4. Verfahren nach einem der vorhergehenden Ansprüche, **dadurch gekennzeichnet, dass** der reale Roboter und das virtuelle Modell gegenseitig Daten übertragen.

5. Verfahren nach einem der vorhergehenden Ansprüche, **dadurch gekennzeichnet, dass** auf Basis des virtuellen Modells, insbesondere des virtuellen Erfassungsmittels und/oder dessen virtuellem Ausgang, automatisch eine Regelung vorgegeben wird.

6. Verfahren nach Anspruch 1, **dadurch gekennzeichnet, dass** im virtuellen Modell virtuelle Abweichungen von einem Sollzustand simuliert und der resultierende virtuelle Ausgang des virtuellen Erfassungsmittels bewertet werden.

7. Verfahren nach einem der vorhergehenden Ansprüche, **dadurch gekennzeichnet, dass** das Erfassungsmittel wenigstens einen ein-, zwei-, drei- oder mehrdimensionalen Ein- und/oder Ausgang aufweist.

8. Verfahren nach einem der vorhergehenden Ansprüche, **dadurch gekennzeichnet, dass** der virtuelle Ausgang als Sollgröße vorgegeben wird.

9. Mittel zum Steuern eines Roboters (R), mit:

einem Modellmittel (P') zum Einrichten und Auswerten eines virtuellen Modells (R') des realen Roboters, wobei das Modell ein virtuelles Erfassungsmittel (S1', S2') aufweist;
einem Simulationsmittel (P') zum virtuellen Simulieren eines Arbeitsprozesses des Roboters und eines aus dem Arbeitsprozess resultierenden virtuellen Ausgangs des virtuellen Erfassungsmittels; und
einem Steuermittel (S1, S2, R) zum Vorgeben einer Steuergröße ($\Delta$x, $\Delta$z) des realen Roboters auf Basis des virtuellen Ausgangs,
**dadurch gekennzeichnet, dass** das Mittel zum Steuern eines realen Roboters zur Durchführung eines Verfahrens nach einem der vorhergehenden Ansprüche eingerichtet ist.

10. Mittel nach Anspruch 9, **dadurch gekennzeichnet, dass** das Steuermittel zum Ausführen des Arbeitsprozesses durch den reale Roboter auf Basis der vorgegebenen Steuergröße eingerichtet ist.

11. Mittel nach einem der vorhergehenden Ansprüche 9 bis 10, **dadurch gekennzeichnet, dass** es einen Server (P') aufweist, mit dem Komponenten (S1, S2, R) des realen Roboters, insbesondere ein Erfassungsmittel und/oder ein Steuermittel, als Klienten kommunizieren.

**Claims**

1. A method for controlling a real robot (R) comprising the steps:

    setting up a virtual model (R') of the real robot wherein the model comprises a virtual detection means (S1', S2');
    virtual simulation of a working process (P') of the robot and a virtual output of the virtual detection means resulting from the working process; and
    providing a control variable ($\Delta$x, $\Delta$z) of the real robot based on the virtual output wherein the virtual detection means is selected from a library and
    a real detection means is set up, in particular selected, positioned, parameterized, controlled and/or evaluated, based on the virtual detection means.

2. A method according to claim 1, **characterized in that** the virtual output is simulated while or before the working process is carried out by the real robot.

3. A method according to one of the preceding claims, **characterized in that** the virtual working process and/or output is synchronized with the real working process.

4. A method according to one of the preceding claims, **characterized in that** the real robot and the virtual model transmit data to each other.

5. A method according to one of the preceding claims, **characterized in that** a control is provided automatically based on the virtual model, in particular on the virtual detection means and/or its virtual output.

6. A method according to claim 1, **characterized in that** in the virtual model virtual deviations from a desired condition are simulated and the resulting virtual output of the virtual detection means is evaluated.

7. A method according to one of the preceding claims, **characterized in that** the detection means comprises at least a one-, two-, three- or multidimensional input and/or output.

8. A method according to one of the preceding claims, **characterized in that** the virtual output is provided as a desired variable.

9. A means for controlling a robot (R) comprising modeling means (P') for setting up and evaluating a virtual model (R') of the real robot wherein the model comprises a virtual detection means (S1', S2');
simulating means (P') for virtual simulating of a working process of the robot and of a virtual output of the virtual detection means resulting from the working process; and
control means (S1, S2, R) for providing a control variable ($\Delta$x, $\Delta$z) of the real robot based on the virtual output,
**characterized in that** the means for controlling of a real robot is arranged to carry out a method according to one of the preceding claims.

10. A means according to claim 9, **characterized in that** the control means is arranged to carry out the working process by the real robot based on the provided control variable.

11. A means according to one of the preceding claims 9 to 10, **characterized in that** it comprises a server (P') with which the components (S1, S2, R) of the real robot, in particular a detection means and/or a control means, communicate as clients.

**Revendications**

1. Procédé de commande d'un robot réel (R), comprenant les étapes :

    d'établissement d'un modèle virtuel (R') du robot réel, le modèle comprenant un moyen de détection virtuel (S', S2') ;
    de simulation virtuelle d'un processus de travail (P') du robot et d'une sortie virtuelle du moyen de détection virtuel résultant du processus de travail ;
et
de prédéfinition d'une grandeur de commande (Δx, Δz) du robot réel sur la base de la sortie virtuelle, le moyen de détection virtuel étant choisi dans une bibliothèque et un moyen de détection réel étant conçu, en particulier choisi, positionné, paramétré, commandé et/ou évalué sur la base du moyen de détection virtuel.

2. Procédé selon la revendication 1, **caractérisé en ce que** la sortie virtuelle est simulée pendant que le processus de travail est mis en oeuvre par le robot réel ou avant qu'il ait été mis en oeuvre par le robot réel.

3. Procédé selon l'une quelconque des revendications précédentes, **caractérisé en ce que** le processus de travail virtuel et/ou la sortie sont synchronisés avec le processus de travail réel.

4. Procédé selon l'une quelconque des revendications précédentes, **caractérisé en ce que** le robot réel et le modèle virtuel transfèrent réciproquement des données.

5. Procédé selon l'une quelconque des revendications précédentes, **caractérisé en ce qu'**une régulation est prédéfinie automatiquement sur la base du modèle virtuel, en particulier du moyen de détection virtuel et/ou de la sortie virtuelle de ce dernier.

6. Procédé selon la revendication 1, **caractérisé en ce que** dans le mode virtuel, des écarts virtuels par rapport à un état théorique sont simulés et la sortie virtuelle résultante du moyen de détection virtuel est évaluée.

7. Procédé selon l'une quelconque des revendications précédentes, **caractérisé en ce que** le moyen de détection comprend au moins une entrée et/ou une sortie unidimensionnelles, bidimensionnelles, tridimensionnelles ou multidimensionnelles.

8. Procédé selon l'une quelconque des revendications précédentes, **caractérisé en ce que** la sortie virtuelle est prédéfinie comme une grandeur théorique.

9. Moyen permettant de commander un robot (R), comprenant :

   un moyen de modélisation (P') destiné à concevoir et à évaluer un modèle virtuel (R') du robot réel, le modèle comprenant un moyen de détection virtuel (S1', S2') ;
   un moyen de simulation (P') permettant la simulation virtuelle d'un processus de travail du robot et d'une sortie virtuelle du moyen de détection virtuel résultant du processus de travail ; et
un moyen de commande (S1, S2, R) permettant de prédéfinir une grandeur de commande (Δx, Δz) du robot réel sur la base de la sortie virtuelle, **caractérisé en ce que** le moyen permettant de commander un robot réel est conçu pour mettre en oeuvre un procédé selon l'une quelconque des revendications précédentes.

10. Moyen selon la revendication 9, **caractérisé en ce que** le moyen de commande est conçu pour mettre en oeuvre le processus de travail par l'intermédiaire du robot réel sur la base de la grandeur de commande prédéfinie.

11. Moyen selon l'une quelconque des revendications précédentes 9 à 10, **caractérisé en ce qu'**il comprend un serveur (P'), au moyen duquel des composants (S1, S2, R) du robot réel, en particulier un moyen de détection et/ou un moyen de commande, communiquent en tant que clients.

Fig. 1

EP 2 500 148 B1

**EP 2 500 148 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19910699 A1
- DE 10351669 A1
- EP 2281666 A1
- DE 10248991 A1
- DE 102009029061 A1